# EUROPÄISCHE PATENTANMELDUNG

(11) **EP 0 950 696 A2**
(43) Veröffentlichungstag der Anmeldung: **20.10.1999**
(21) Anmeldenummer: 99106766.1
(22) Anmeldetag: 03.04.1999
(51) Int. Cl.: C09D 11/10, C09D 129/14

(54) **Druckfarben und Lacke enthaltend Polyvinylbutyrale basierend auf teilverseiften Polyvinylalkoholen**

(30) Priorität: 16.04.1998 DE 19816722
(71) Anmelder: Clariant GmbH, 65929 Frankfurt am Main (DE)
(72) Erfinder: Fuss, Robert Dr., 65835 Liederbach (DE); Wehner, Susanne, 65606 Villmar (DE); Schindler, Hermann Dr., 65817 Eppstein (DE)

(57) **Zusammenfassung**

Die vorliegende Erfindung betrifft Druckfarben und Lacke enthaltend Polyvinylbutyrale mit einem Acetalisierungsgrad von 45 bis 80 Mol-%, die aus Polyvinylalkoholen hergestellt werden, deren Hydrolysegrad im Bereich von 70 bis 96 Mol-% liegt.

## Beschreibung

Die vorliegende Erfindung betrifft Druckfarben und Lacke enthaltend Polyvinylbutyrale als Bindemittel die aus teilverseiften Polyvinylalkoholen hergestellt werden.

Es ist bekannt, Polyvinylbutyrale als Bindemittel für Lacke und Druckfarben zu verwenden.

Im Lackbereich wird Polyvinylbutyral beispielsweise in Autoreparaturlacken, Einbrennlacken, Shop-Primern, Wash-Primern und Haftlacken sowie in Isolieranstrichen, beispielsweise auf Teer und Nikotin, sowie in Kunststofflacken, Nitrocelluloselacken und Papierlacken eingesetzt. Für den Anwender sind dabei feststoffreiche Formulierungen von Vorteil, da dadurch die Lösemittelmenge reduziert werden kann.

Für den Verpackungsdruck werden Polyvinylbutyrale mit niedriger Lösungsviskosität eingesetzt. Da sie in ihrer Zusammensetzung der Empfehlung XL des Bundesinstituts für gesundheitlichen Verbraucherschutz und Veterinärmedizin (BgW) und der FDA § 175.300 entsprechen, können damit hergestellte Druckfarben zum Bedrucken von Lebensmittelverpackungen verwendet werden. Die Druckfarben besitzen gute Haftungseigenschaften auf organischen und anorganischen Substraten und eignen sich daher zum Bedrucken von Polyolefin-, Metall-, Celluloseacetat-, Polyamid- und Polysryrolfolien. Aufgrund dieser guten Haftungseigenschaften werden Polyvinylbutyrale mit niedriger Lösungsviskosität auch für den Zwischenlagendruck eingesetzt. Bei Bedarf kann die Haftung auf schwierigen Untergründen durch Zusatz eines Haftvermittlers verbessert werden. Die Druckfarben zeichnen sich durch niedrige Lösemittelretention, gutes Fließverhalten sowie gute Wasser- und Kältebeständigkeit aus. Die verwendeten Polyvinylbutyrale besitzen eine gute Löslichkeit in Alkoholen und eine breite Verträglichkeit mit Verschnittharzen und Additiven.

Nachteilig bei den bisher eingesetzten Polyvinylbutyralen, die auf vollverseiften Polyvinylalkoholen basieren, ist allerdings, daß die resultierenden Druckfarben vergleichsweise festkörperarm sind. Die Herstellung von Polyvinylbutyralen wird beispielsweise in der EP-A-0 174 479 und der DE-A-35 26 314 beschrieben. Durch Zugabe des Pigmentes zur Polyvinylbutyral-Lösung steigt die Viskosität an; die Forderung nach einem höheren Pigmentgehalt ist aufgrund zu hoher Viskosität bzw. Instabilität der Druckfarben nicht realisierbar.

Aufgrund des Wunsches nach immer schneller laufenderen Druckmaschinen, bestand somit ein Bedarf an Produkten, die bei der gewünschten Druckviskosität einen hohen Pigment-Gehalt besitzen und farbstarke Drucke selbst in niedriger Schichtdicke ergeben.

Aufgabe der vorliegenden Erfindung war es daher, hochpigmentierte Farbpasten und daraus hergestellte Druckfarben mit niedriger Viskosität sowie festkörperreiche Lacke zur Verfügung zu stellen.

Diese Aufgabe wurde überraschenderweise gelöst durch Druckfarben und Lacke, die Polyvinylbutyrale enthalten, die auf teilverseiften Polyvinylalkoholen basieren.

Gegenstand der vorliegenden Erfindung sind somit Druckfarben und Lacke, enthaltend Polyvinylbutyrale mit einem Acetalisierungsgrad von 45 bis 80 Mol-%, die aus Polyvinylalkoholen hergestellt werden, deren Hydrolysegrad im Bereich von 70 bis 96 Mol-% liegt.

Der Acetalisierungsgrad der Polyvinylbutyrale liegt vorzugsweise zwischen 60 und 80 Mol-% und der Hydrolysegrad der eingesetzten Polyvinylalkohole liegt vorzugsweise zwischen 75 und 90 Mol-%.

Die eingesetzten Polyvinylalkohole weisen vorzugsweise einen Polymerisationsgrad auf, der im Bereich von 200 bis 3500, besonders bevorzugt zwischen 250 und 1000 und insbesondere zwischen 270 und 600 liegt.

Die erfindungsgemäß eingesetzten Polyvinylbutyrale können nach allen dem Fachmann bekannten Verfahren hergestellt werden.

Der Polyvinylbutyral-Gehalt in der Druckfarbe bzw. im Lack kann je nach Anwendungszweck in weiten Bereichen variieren. Er liegt jedoch vorzugsweise im Bereich von 1 bis 25 Gew.-%.

Das Polyvinylbutyral kann dabei entweder als einziges Bindemittel verwendet werden, oder in Kombination mit Verschnittharzen und Hilfsmitteln. Desweiteren ist es möglich, das Polyvinylbutyral lediglich als Additiv für Druckfarben zu verwenden.

Zur Pigmentierung sind alle für Druckfarben bekannte organischen und anorganischen Pigmente geeignet.

Unter einem teilverseiftem Polyvinylalkohol wird in der vorliegenden Anmeldung ein Polyvinylalkohol mit einem Hydrolysegrad im Bereich von 70 bis 96 Mol-%, vorzugsweise 70 bis 90 Mol-% verstanden.

Überraschenderweise wurde gefunden, daß nach Zugabe des Pigmentes oder der Pigmente zu einer Polyvinylbutyral-Lösung, hergestellt aus teilverseiftem Polyvinylalkohol und anschließender Vermahlung die resultierenden Farbpasten eine deutlich niedrigere Viskosität aufweisen, als dies von der Viskosität des eingesetzten Bindemittels zu erwarten gewesen wäre. Farbpasten mit Polyvinylbutyralen auf Basis von vollverseiften Polyvinylalkoholen zeigen dieses Verhalten nicht.

Folglich ist es zur Verdünnung auf Druckviskosität möglich, deutlich weniger Firnis bzw. Lösungsmittel zu verwenden, d.h. die Druckfarben können deutlich höhere Mengen an Pigment enthalten. Die Forderung nach höherer Pigmentierung bei gleicher Viskosität bzw. gleicher Pigmentierung bei niedrigerer Viskosität kann somit erfüllt werden.

Aufgrund der guten Fließeigenschaften und der guten Pigmentbenetzungen sind die Polyvinylbutyrale, die aus teilverseiften Polyvinylalkoholen hergestellt werden, nicht nur für die Herstellung von hochpigmentierten Druckfarben und festkörperreichen Lacken, sondern auch für die Herstellung von Pigmentpräparationen hervorragend geeignet.

Die Erfindung wird im folgenden anhand von Ausführungsbeispielen näher beschrieben, ohne dadurch jedoch in irgendeiner Weise beschränkt zu werden.

### Herstellung der Polyvinylbutyrale

### Beispiel 1:

540 g Polyvinylalkohol mit einem Polymerisationsgrad von 360 und einem Hydrolysegrad von 88 Mol-% werden in 6600 ml Wasser gelöst. Nach Eintrag von 269 g Butyraldehyd wird unter Zudosieren von 1090 ml 20 %iger Salzsäurelösung die Reaktion bei 0°C gestartet. Nach Beenden der Salzsäuredosierung wird die Reaktionslösung über einen Zeitraum von 3 Stunden auf 30°C erwärmt und weitere 2 Stunden bei dieser Temperatur gehalten. Das ausgefallene Granulat wird abfiltriert und hinreichend mit Wasser gewaschen. Zwecks Neutralisation bzw. Alkalisierung wird die Produktsuspension mit 350 ml 10 %iger Natronlauge versetzt und abermals leicht erwärmt. Überschüssige Lauge wird durch Waschen mit Wasser entfernt. Anschließend wird das Produkt getrocknet. Das erhaltene Polyvinylbutyral weist einen Restacetatgehalt von 13,5 % und einen Rest-Polyvinylalkoholgehalt von 18 Mol-% auf. Die Viskosität nach Höppler gemäß DIN 53015 beträgt bei einer 10 %igen Lösung in Ethanol 13,75 mPas und bei einer 10 %igen Lösung in Ethylacetat 8,52 mPas.

### Beispiel 2:

540 g Polyvinylalkohol mit einem Polymerisationsgrad von 630 und einem Hydrolysegrad von 88 Mol-% werden in 6600 ml Wasser gelöst. Nach Eintrag von 262 g Butyraldehyd wird unter Zudosieren von 1090 ml 20 %iger Salzsäurelösung die Reaktion bei 0°C gestartet. Nach Beenden der Salzsäuredosierung wird die Reaktionslösung über einen Zeitraum von 4 Stunden auf 30°C erwärmt und 1 Stunde bei dieser Temperatur gehalten. Das ausgefallene Granulat wird abfiltriert und hinreichend mit Wasser gewaschen. Zwecks Neutralisation bzw. Alkalisierung wird die Produktsuspension mit 250 ml 10 %iger Natronlauge versetzt und abermals leicht erwärmt. Überschüssige Lauge wird durch Waschen mit Wasser entfernt. Anschließend wird das Produkt getrocknet. Das erhaltene Polyvinylbutyral weist einen Restacetatgehalt von 15,5 % und einen Rest-Polyvinylalkoholgehalt von 19 Mol-% auf. Die Viskosität nach Höppler gemäß DIN 53015 beträgt bei einer 10 %igen Lösung in Ethanol 26,9 mPas und bei einer 10 %igen Lösung in Ethylacetat 23,45 mPas.

### Beispiel 3:

540 g Polyvinylalkohol mit einem Polymerisationsgrad von 270 und einem Hydrolysegrad von 84 Mol-% werden in 6600 ml Wasser gelöst. Nach Eintrag von 262 g Butyraldehyd wird unter Zudosieren von 1091 ml 20%iger Salzsäurelösung die Reaktion bei 0°C gestartet. Nach Beenden der Salzsäuredosierung wird die Reaktionslösung über einen Zeitraum von 4 Stunden auf 30°C erwärmt und 1 Stunde bei dieser Temperatur gehalten. Das ausgefallene Granulat wird abfiltriert und hinreichend mit Wasser gewaschen. Zwecks Neutralisation bzw. Alkalisierung wird die Produktsuspension mit 400 ml 10 %iger Natronlauge versetzt und abermals leicht erwärmt. Überschüssige Lauge wird durch Waschen mit Wasser entfernt. Anschließend wird das Produkt getrocknet. Das erhaltene Polyvinylbutyral weist einen Restacetatgehalt von 19,4 % und einen Rest-Polyvinylalkoholgehalt von 16,8 Mol-% auf. Die Viskosität nach Höppler gemäß DIN 53015 beträgt bei einer 10 %igen Lösung in Ethanol 10,77 mPas und bei einer 10 %igen Lösung in Ethylacetat 5,75 mPas.

### Beispiel 4:

540 g Polyvinylalkohol mit einem Polymerisationsgrad von 570 und einem Hydrolysegrad von 87 Mol-% werden in 6600 ml Wasser gelöst. Nach Eintrag von 289 g Butyraldehyd wird unter Zudosieren von 1091 ml 20%iger Salzsäurelösung die Reaktion bei 0°C gestartet. Nach Beenden der Salzsäuredosierung wird die Reaktionslösung über einen Zeitraum von 4 Stunden auf 30°C erwärmt und 1 Stunde bei dieser Temperatur gehalten. Das ausgefallene Granulat wird abfiltriert und hinreichend mit Wasser gewaschen. Zwecks Neutralisation bzw. Alkalisierung wird die Produktsuspension mit 250 ml 10 %iger Natronlauge versetzt und abermals leicht erwärmt. Überschüssige Lauge wird durch Waschen mit Wasser entfernt. Anschließend wird das Produkt getrocknet. Das erhaltene Polyvinylbutyral weist einen Restacetatgehalt von 14,2 % und einen Rest-Polyvinylalkoholgehalt von 17,5 Mol-% auf. Die Viskosität nach Höppler gemäß DIN 53015 beträgt bei einer 10 %igen Lösung in Ethanol 15 mPas und bei einer 10 %igen Lösung in Ethylacetat 9,65 mPas.

### Beispiel 5:

3000 g Polyvinylalkohol mit einem Polymerisationsgrad von 420 und einem Hydrolysegrad von 85 Mol-% werden in 37000 g Wasser gelöst. Nach Eintrag von 1450 g Butyraldehyd und eines Oxidationsstabilisators wird unter Zudosieren von 6061 ml 20 %iger Salzsäurelösung die Reaktion bei -1°C gestartet. Nach Beenden der Salzsäuredosierung wird die Reaktionslösung über einen Zeitraum von 4 Stunden auf 30°C erwärmt und 1 Stunde bei dieser Temperatur gehalten. Das ausgefallene Granulat wird abfiltriert und hinreichend mit Wasser gewaschen. Zwecks Neutralisation bzw. Alkalisierung wird die Produktsuspension mit 1500 ml 10 %iger Natronlauge versetzt und abermals leicht erwärmt. Überschüssige Lauge wird durch Waschen mit Wasser entfernt. Anschließend wird das Produkt getrocknet. Das erhaltene Polyvinylbutyral weist einen Restacetatgehalt von 17 % und einen Rest-Polyvinylalkoholgehalt von 18,2 Mol-% auf. Die Viskosität nach Höppler gemäß DIN 53015 beträgt bei einer 10 %igen Lösung in Ethanol 15,51 mPas und bei einer 10 %igen Lösung in Ethylacetat 9,94 mPas.

### Vergleichsbeispiel

3000 g Polyvinylalkohol mit einem Polymerisationsgrad von 400 und einem Hydrolysegrad von 98 Mol-% werden in 37000 g Wasser gelöst. Nach Eintrag von 1760 g Butyraldehyd und eines Oxidationsstabilisators wird unter Zudosieren von 4800 ml 20 %iger Salzsäurelösung die Reaktion bei 2°C gestartet. Nach Beenden der Salzsäuredosierung wird die Reaktionslösung über einen Zeitraum von 3 Stunden auf 40°C erwärmt und weitere 2 Stunden bei dieser Temperatur gehalten. Das ausgefallene Granulat wird abfiltriert und hinreichend mit Wasser gewaschen. Zwecks Neutralisation bzw. Alkalisierung wird die Produktsuspension mit 2000 ml 10 %iger Natronlauge versetzt und abermals leicht erwärmt. Überschüssige Lauge wird durch Waschen mit Wasser entfernt. Anschließend wird das Produkt getrocknet. Das erhaltene Polyvinylbutyral weist einen Restacetatgehalt von 2 % und einen Rest-Polyvinylalkoholgehalt von 19,3 Mol-% auf. Die Viskosität nach Höppler gemäß DIN 53015 beträgt bei einer 10 %igen Lösung in Ethanol 25 mPas.

### Herstellung von Farbkonzentraten

Von den Polyvinylbutyralen der Beispiele 1 bis 5 sowie des Vergleichsbeispiels werden Lösungen in Ethanol hergestellt und die Auslaufzeiten der Lösungen im DIN 4 Becher (DIN 53211/23°C) bestimmt. Die Ergebnisse sind in Tabelle 1 tabellarisch dargestellt.

Zu 400 g von den auf 20 s Auslaufzeit im DIN 4 Becher (DIN 53211/23°C) eingestellten Lösungen der Beispiele 1 bis 5 sowie des Vergleichsbeispiels wird jeweils 100 g Hostaperm Blau B 2 G gegeben. Nach Homogenisierung wird unter Kühlen 30 Minuten mit Glasperlen angerieben. Das Mahlgut wird mittels eines Siebes von den Perlen getrennt. Anschließend wird die Auslaufzeit in einem 6 mm Becher (DIN 53211/23°C) gemessen. Die Ergebnisse sind in Tabelle 2 tabellarisch dargestellt.

**Tabelle 1**

| | Auslaufzeit [s] | | | |
|---|---|---|---|---|
| | 25 % | 22,5 % | 20 % | 17,5 % |
| Beispiel 1 | 80 | 53 | 35 | 24 |
| Beispiel 2 | 221 | 130 | 78 | 44 |
| Beispiel 3 | 45 | 31 | 23 | 19 |
| Beispiel 4 | 181 | 111 | 67 | 40 |
| Beispiel 5 | 79 | 51 | 33 | 23 |
| Vergleichsbeispiel | 115 | 71 | 44 | 29 |

**Tabelle 2**

| | Auslaufzeit [s] |
|---|---|
| Beispiel 1 | 14 |
| Beispiel 2 | 14 |
| Beispiel 3 | 17 |
| Beispiel 4 | 15 |
| Beispiel 5 | 14 |
| Vergleichsbeispiel | 30 |

Wie Tabelle 2 zeigt, sind die Anreibungen der Beispiele 1 bis 5 deutlich niedriger viskos als die des Vergleichsbeispiels. Die Anreibungen werden anschließend mit Firnis auf gleiche Druckviskosität eingestellt. Aufgrund der niedrigeren Viskosität der Beispiele 1 bis 5 kann zur Verdünnung der Farbkonzentrate auf Druckviskosität wesentlich weniger Firnis (bzw. Lösemittel) verwendet werden, d.h. die Druckfarben enthalten deutlich höhere Mengen Pigment. Die Ergebnisse sind in Tabelle 3 tabellarisch dargestellt.

**Tabelle 3**

| | Gehalt an Pigment [%] |
|---|---|
| Beispiel 1 | 8 |
| Beispiel 2 | 10 |
| Beispiel 3 | 7 |
| Beispiel 4 | 10 |
| Beispiel 5 | 8 |
| Vergleichsbeispiel | 4 |

### Herstellung von Haftgrundierungen

Typische Haftgrundierungen werden, wie in nachfolgender Tabelle aufgelistet, hergestellt. Es wurden sowohl kommerziell verfügbares Polyvinylbutyral als auch das erfindungsgemäß erhaltene Produkt in sonst gleichen Rezepturen eingesetzt. Aus den resultierenden Auslaufzeiten ist das positivere Verhalten des erfindungsgemäßen Produkts klar ersichtlich. Die Auslaufzeiten können bei gleicher Rezeptur um 10 % gesenkt werden, was eine deutliche Verbesserung gegenüber dem Stand der Technik darstellt.

### Haftgrundierungen auf Basis von kommerziellem Polyvinylbutyral und erfindungsgemäßem Polyvinylbutyral

| Richtrezeptur | | | | |
|---|---|---|---|---|
| | V1 | 2 | V3 | 4 |
| Niedrig viskoses PVB, 20 % Lsg.* | 40,00 | | 29,20 | |
| PVB-neu, 20 % Lsg.* | | 40,00 | | 29,20 |
| Phenodur PR 263 70 % Lff. | | | 8,50 | 8,50 |
| Beckopox EM 460 60 % | 13,40 | 13,40 | | |
| Beckopox EP 301 50 % ** | | | 8,50 | 8,50 |
| Talkum IT extra | 8,00 | 8,00 | 8,00 | 8,00 |
| Heucophos ZPO | 8,00 | 8,00 | 8,00 | 8,00 |
| Bayferrox 120 M | 4,80 | 4,80 | 4,80 | 4,80 |
| Wacker HDK-H 15 10 % Paste *** | 3,20 | 3,20 | 3,20 | 3,20 |
| Verdünnung **** | 8,82 | 8,82 | 9,20 | 9,20 |
| Phosphorsäure 85 % 1:3 in Butanol | 3,20 | 3,20 | 3,20 | 3,20 |
| Summe: | 89,42 | 89,42 | 82,60 | 82,60 |
| Bindemittel fest | 16,04 | 16,04 | 16,04 | 16,04 |
| Pigment | 20,80 | 20,80 | 20,80 | 20,80 |
| Festgehalt | 41,20 % | 41,20 % | 44,60 % | 44,60 % |
| Viskosität DIN 4 mm-Becher; 23°C | 49 sec. | 45 sec. | 54 sec. | 50 sec. |

| | | | | |
|---|---|---|---|---|
| * Kommerz. PVB bzw. PVB-neu / 20 % Lösung 20 % Polyvinylbutyral 16 % Butanol 64 % Xylol | | | | |
| ** Beckopox EP 301 50 % 50 % Beckopox EP 301 (fest) 25 % Xylol 25 % Solvenon PM | | | | |
| *** Wacker HDK-H 15 10 % Paste 85 % Xylol 10 % Wacker HDK-H 15 5 % Additol XI 270 | | | | |
| **** Verdünnung 30 % Butanol 30 % Solvenon PM 40 % Xylol | | | | |

## Patentansprüche

1. Druckfarben und Lacke enthaltend Polyvinylbutyrale mit einem Acetalisierungsgrad von 45 bis 80 Mol-%, die aus Polyvinylalkoholen hergestellt werden, deren Hydrolysegrad im Bereich von 70 bis 96 Mol-% liegt.

2. Druckfarben und Lacke gemäß Anspruch 1, dadurch gekennzeichnet, daß der Acetalisierungsgrad der Polyvinylbutyrale im Bereich von 60 bis 80 Mol-% liegt.

3. Druckfarben und Lacke gemäß Anspruch 1 oder 2, dadurch gekennzeichnet, daß der Hydrolysegrad der eingesetzten Polyvinylalkohole im Bereich von 75 bis 90 Mol-% liegt.

4. Druckfarben und Lacke gemäß mindestens einem der vorhergehenden Ansprüche, dadurch gekennzeichnet, daß die eingesetzten Polyvinylalkohole einen Polymerisationsgrad im Bereich von 200 bis 3500 aufweisen.

5. Druckfarben und Lacke gemäß mindestens einem der vorhergehenden Ansprüche, dadurch gekennzeichnet, daß der Polyvinylbutyral-Gehalt in der Druckfarbe bzw. im Lack im Bereich von 1 bis 25 Gew.-% liegt.
